# EUROPEAN PATENT SPECIFICATION

(11) **EP 4 089 419 B1**
(45) Date of publication and mention of the grant of the patent: **07.10.2026**
(21) Application number: 20911388.5
(22) Date of filing: 01.12.2020
(51) Int. Cl.: G01N 35/02, G01N 35/04

(54) **SPECIMEN CONVEYANCE DEVICE AND SPECIMEN CONVEYANCE METHOD**
PROBENFÖRDERUNGSSYSTEM UND PROBENFÖRDERUNGSVERFAHREN
DISPOSITIF DE TRANSPORT D'ÉCHANTILLON ET PROCÉDÉ DE TRANSPORT D'ÉCHANTILLON

(30) Priority: 07.01.2020 JP 2020001091
(43) Date of publication of application: 16.11.2022
(73) Proprietor: Hitachi High-Tech Corporation, Minato-ku Tokyo 105-6409 (JP)
(72) Inventor: WATANABE, Hiroshi, Tokyo 105-6409 (JP); YAMADA, Hayato, Tokyo 105-6409 (JP)
(74) Representative: Strehl & Partner mbB
(86) International application number: PCT/JP2020/044719
(87) International publication number: WO 2021/140787

(56) References cited:
- JP-A- 2008 298 495
- JP-A- 2012 117 855
- JP-A- 2014 089 072
- JP-B2- 5 842 785
- US-A1- 2008 299 007
- US-A1- 2014 231 217

## Description

### Technical Field

The present invention relates to a specimen conveyance device and a specimen conveyance method used in an automatic analysis system for analyzing biological samples (hereinafter referred to as specimens) such as blood, plasma, serum, urine, and other body fluids, and a specimen pre-treatment device that performs pre-treatment necessary for analysis.

### Background Art

As an example of a specimen rack conveyance system capable of shortening a moving line of a user from confirming an error until restarting an operation, PTL 1 discloses that, in order to grasp a position of each rack, the position of each rack is displayed in a system configuration diagram displayed on a monitor by performing communication related to rack information and rack positions in real time between a central processing unit and each processing unit, and each rack is displayed in a distinguished manner depending on a type and property of a specimen installed in the rack.

In addition, PTL 2 discloses that at least one of a plurality of conveyance devices includes a transmission switch for transmitting a signal related to restart of conveyance to a control device, and in a case where conveyance of a specimen rack is stopped due to an abnormality which occurs in one of the plurality of conveyance devices, when receiving the signal related to the restart of the conveyance by a transmission switch operation of a conveyance device different from the conveyance device in which the abnormality occurred, the control device restarts the conveyance of the specimen rack in a case where the abnormality is eliminated on the basis of state information on the conveyance device in which the abnormality occurs.
The document US 2014/231217 A1 discloses a specimen conveyance device according to the preamble of claim 1. Further related art is disclosed in the documents JP 5 842785 82 and US 2008/299007 A1.

### Citation List

### Patent Literature

PTL 1: JP-A-11-83863
PTL 2: JP-A-2011-209219

### Summary of Invention

### Technical Problem

In the related art, when a position on a device of a specimen tube whose position is desired to be grasped or a position on a device of a device part whose position is desired to be grasped is displayed, the position on the device is displayed on an operation unit screen or a display unit of each unit of the device.

For example, PTL 1 discloses that the position of the rack is displayed in the system configuration diagram displayed on the monitor, and each rack is displayed in real time in a distinguished manner depending on the type and property of the specimen installed in the rack.

PTL 2 discloses that a display unit of a specimen conveyance unit includes LEDs indicating whether an error occurs in not only the corresponding unit but also units on an upstream side and a downstream side of the conveyance, and notifies the user of an error occurrence location by lighting an LED corresponding to the time of occurrence of the error.

Here, when the position on the device of the rack where a specimen tube is installed is displayed on the operation unit screen as described in PTL 1 described above, or when states of each unit of the device and units on the upstream side and the downstream side of the unit are displayed on the display unit of the unit as described in PTL 2, in a small-scale system, it is relatively easy to specify the position on the device of the specimen tube whose position is desired to be grasped and the position on the device of the device part whose position is desired to be grasped.

In recent years, enlargement of automatic analysis systems or pre-treatment systems for specimen have caused appearance of medium-scale systems and large-scale systems in which a portion to be displayed and an actual position on a device to be grasped are separated from each other.

In such a case, in the configurations of PTL 1 and PTL 2, since the portion to be displayed and the actual position on the device to be grasped are separated from each other, there is a problem that it is difficult to specify a position on the device in the vicinity of a portion of the device whose position is actually desired to be specified. For example, in a case where the same configurations are arranged in parallel, it is necessary to accurately store a display content, and it may be difficult to specify the position even when the display content is accurately stored. Therefore, a technique for more easily specifying the position is desired.

In addition, even in a small automatic analysis device, depending on conditions such as many specimen tubes being mounted, it takes time to actually specify the position with the configurations described in PTL 1 and PTL 2, and there is also room for improvement.

An object of the present invention is to provide a specimen conveyance device and a specimen conveyance method that can easily specify, regardless of the size of the system, the position on the device of the specimen tube whose position is desired to be grasped and the position on the device of the device part whose position is desired to be grasped, as compared to the related art.

### Solution to Problem

In order to solve the above problem, the present invention proposes a specimen conveyance device according claim 1 and a method for conveying a specimen according to claim 9.

### Advantageous Effects of Invention

According to the present invention, regardless of the size of the system, the position on the device of the specimen tube whose position is desired to be grasped and the position on the device of the device part whose position is desired to be grasped can be easily specified. Problems, configurations, and effects other than those described above will be clarified with the following description of embodiments.

### Brief Description of Drawings

[Fig. 1] Fig. 1 is a diagram showing a schematic configuration of a specimen inspection automation system using a specimen conveyance device according to Example 1 of the present invention.
[Fig. 2] Fig. 2 is a diagram showing a schematic configuration of a conveyance block of the specimen conveyance device according to Example 1.
[Fig. 3] Fig. 3 is a diagram showing a connection example when three conveyance blocks of the specimen conveyance device according to Example 1 are connected.
[Fig. 4] Fig. 4 is a diagram schematically showing a main part of the specimen conveyance device according to Example 1.
[Fig. 5] Fig. 5 is a diagram showing a schematic configuration of an automatic analysis system integrated with a specimen pre-treatment and post-treatment unit, and an automatic analysis unit, using a specimen conveyance device according to Example 2 of the present invention. [Fig. 6] Fig. 6 is a diagram showing a schematic configuration of a conveyance block of the specimen conveyance device according to Example 2.
[Fig. 7] Fig. 7 is a diagram schematically showing a main part of the specimen conveyance device according to Example 2.

### Description of Embodiments

Hereinafter, examples of a specimen conveyance device and a specimen conveyance method according to the present invention will be described with reference to the drawings.

### <Example 1>

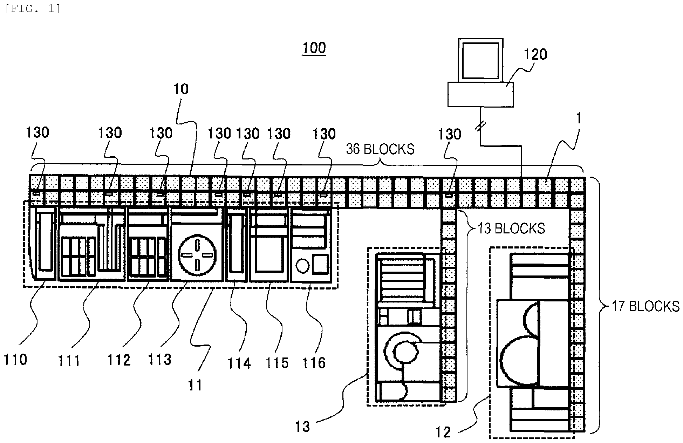

Example 1 of a specimen conveyance device and a specimen conveyance method according to the present invention will be described with reference to Figs. 1 to 4.

First, a schematic configuration of a specimen inspection automation system provided with the specimen conveyance device according to Example 1 of the present invention will be described with reference to Fig. 1. Fig. 1 is a diagram showing the schematic configuration of the specimen inspection automation system provided with the specimen conveyance device.

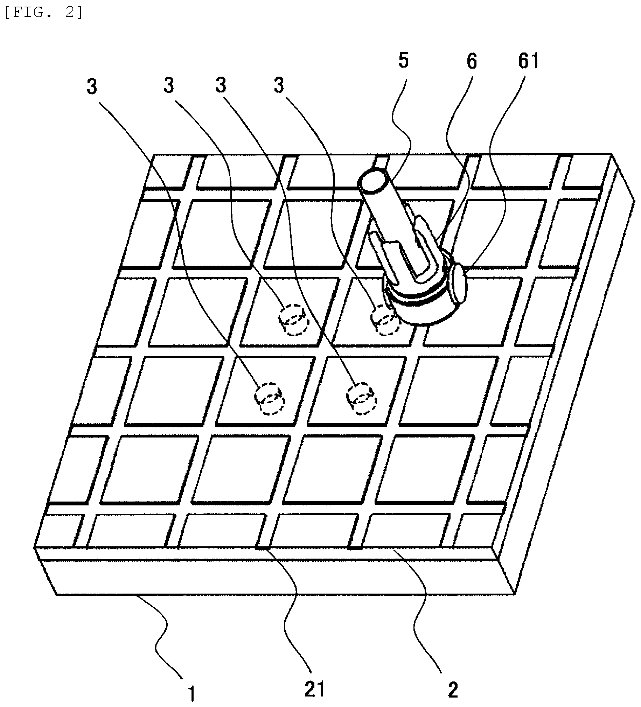

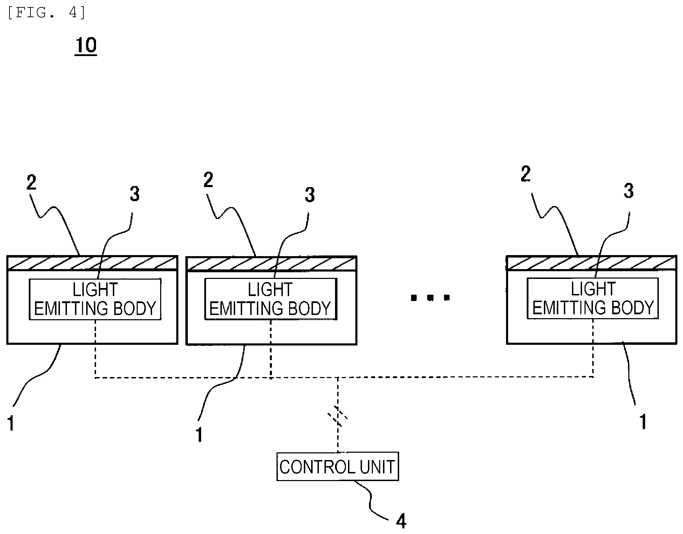

A specimen inspection automation system 100 shown in Fig. 1 includes a specimen conveyance unit 10, a specimen pre-treatment and post-treatment unit 11, a specimen automatic analysis unit (C) 12, a specimen automatic analysis unit (M) 13, and an operation unit 120 that integrally manages the specimen inspection automation system 100. In Example 1, the specimen conveyance unit 10 includes a total of 100 conveyance blocks 1 (refer to Figs. 2 and 4 and the like).

The specimen pre-treatment and post-treatment unit 11 includes a closing unit 110, a cold storage unit 111, a specimen input unit 112, a centrifugal separation unit 113, an opening unit 114, a dispensing unit 115, and a barcode attaching unit 116, while it is needless to say that this is merely an example.

The specimen input unit 112 is a unit that provides a specimen tube holder 6 in which a specimen tube 5 from which a specimen to be measured is collected is installed.

The centrifugal separation unit 113 is a unit including a centrifugal separation mechanism that performs centrifugal separation on the specimen under a predetermined condition with respect to the specimen tube 5.

The opening unit 114 is a unit that opens the specimen tube 5 subjected to the centrifugal separation.

The dispensing unit 115 is a unit that dispenses a part of a supernatant liquid of the centrifugally separated specimen with respect to another specimen tube 5 different from the specimen tube 5 (hereinafter, referred to as a child specimen tube 5).

The closing unit 110 is a unit that closes the opened specimen tube 5.

The cold storage unit 111 is a unit that cools and stores the closed specimen tube 5 in preparation for a possibility of re-inspection or the like.

The barcode attaching unit 116 is a unit that attaches a barcode label for identifying the child specimen tube dispensed from the specimen tube 5 centrifugally separated by the dispensing unit 115 at a side surface of the child specimen tube.

A detailed configuration of the specimen pre-treatment and post-treatment unit 11 is not particularly limited, and a configuration of a known pre-treatment device can be employed. Further, when provided in plurality, the specimen pre-treatment and post-treatment units may have the same or different specifications, and are not particularly limited.

The specimen automatic analysis units 12 and 13 are units for transferring the specimen processed by the specimen pre-treatment and post-treatment unit 11 and performing qualitative and quantitative analysis of components of the specimen. Analysis items in these units are not particularly limited, and a configuration of a known automatic analysis device for analyzing biochemical items and immune items can be employed. Further, when provided in plurality, the specimen automatic analysis units may have the same or different specifications, and are not particularly limited.

The operation unit 120 controls an operation of the entire system including the specimen conveyance unit 10, the specimen pre-treatment and post-treatment unit 11, the specimen automatic analysis unit (C) 12, and the specimen automatic analysis unit (M) 13, and is implemented by a computer including a display device such as a liquid crystal display, an input device, a storage device, a CPU, and a memory. In addition, the operation unit 120 controls various operations of each module described above. The control of the operation of each device by the operation unit 120 is executed on the basis of various programs recorded in the storage device.

In addition, control processes on the operations executed by the operation unit 120 may be integrated into one program, may be divided into a plurality of programs, or may be a combination of these cases. Further, a part or all of the programs may be implemented by dedicated hardware, or may be modularized.

Fig. 1 described above shows a case where two specimen automatic analysis units 12 and 13 are provided, while the number of the specimen automatic analysis units is not particularly limited, and may be any number of one or more.

The case in which the specimen conveyance unit 10, which is the specimen conveyance device, connects the inside of the specimen pre-treatment and post-treatment unit 11, or the specimen pre-treatment and post-treatment unit 11 and the specimen automatic analysis units 12 and 13 has been described, while the specimen conveyance device according to the present invention can also be applied to a system in a form of connecting the inside of an analysis system implemented by two or more specimen automatic analysis units.

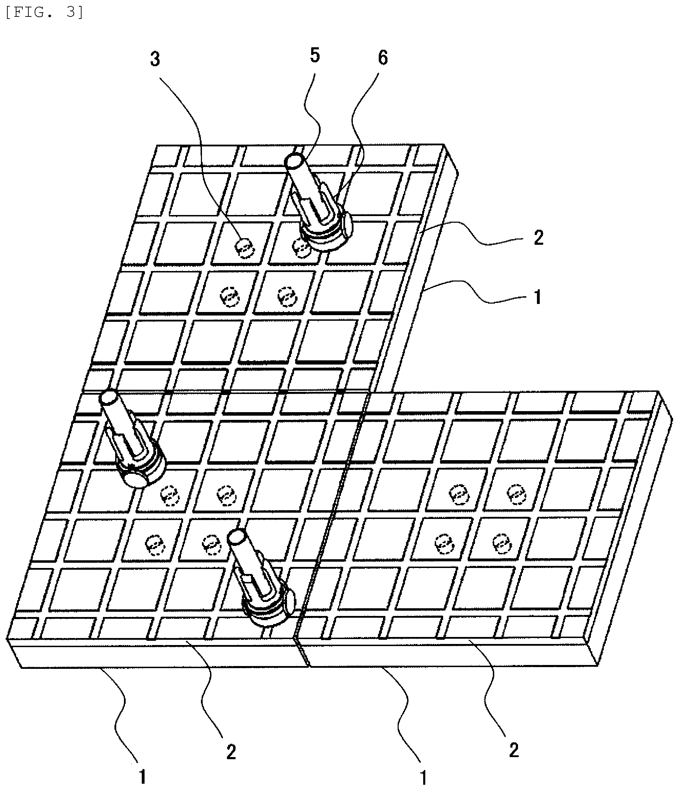

Next, a specific configuration of the specimen conveyance device according to the present example will be described with reference to Figs. 2 to 4. Fig. 2 is a diagram showing a schematic configuration of a conveyance block of the specimen conveyance device according to Example 1. Fig. 3 is a diagram showing a connection example when three conveyance blocks of the specimen conveyance device are connected. Fig. 4 is a diagram schematically showing a main part of the specimen conveyance device.

As shown in Fig. 2, the conveyance block 1 constituting the specimen conveyance unit 10 includes four light emitting bodies 3 and a conveyance plane 2 that includes conveyance guide slots 21 for the specimen tube holder 6. As shown in Figs. 1 and 3, a plurality of conveyance blocks 1 are arranged on a two-dimensional plane, so that the specimen conveyance unit 10 is implemented.

The conveyance plane 2 of the conveyance block 1 shown in Fig. 4 and the like is made of a material that can transmit light emitted by the light emitting body 3, and is made of, for example, a translucent or transparent plastic that can transmit light.

As shown in Fig. 4, the light emitting body 3 is arranged in a state of being fixed to a substrate or the like vertically below the conveyance plane 2. In the present example, light having different wavelengths can be emitted, that is, light having different wavelengths that are recognized as different colors in human vision is emitted. More specifically, a color LED including light emitting elements of red, green, and blue is used, but is not limited thereto, and a monochromatic light source may be used. In addition, a luminance of the color LED is adjustable, but is not necessarily adjustable.

In the present example, as an example, four light emitting bodies 3 are arranged in each conveyance block 1 below the conveyance plane 2. By providing a plurality of light emitting bodies 3 in each conveyance block 1, it is possible to improve a visibility as compared with a case where one light emitting body 3 is provided.

The number of the light emitting bodies 3 provided in one conveyance block 1 is not limited to four, and may be any number of one or more, without being necessarily plural.

As shown in Fig. 4, the specimen conveyance device according to the present example includes a control unit 4 that controls a conveyance operation of the specimen tube holder 6 by the plurality of conveyance blocks 1 each including the light emitting bodies 3. The control unit 4 is provided in the operation unit 120 as shown in, for example, Fig. 1, but can also be provided independently in the vicinity of the conveyance block 1.

In the present example, the control unit 4 causes the light emitting bodies 3 of a specific conveyance block 1 among the conveyance blocks 1 to emit light in accordance with information on the conveyance state of the specimen tube holder 6. For example, the control unit 4 can cause the light emitting bodies 3 to emit light in different light emitting states in the conveyance block 1 on which the specimen having the coincident identification information with a specimen designated in advance is located and in the other conveyance blocks 1. Alternatively, the control unit 4 can set one of them to a non-light emitting state.

The control unit 4 can cause the light emitting bodies 3 to emit light in different light emitting states in the conveyance block 1 in which the specimen tube holder 6 is present and in the other conveyance blocks 1, or can set one of them to a non-light emitting state.

Further, the control unit 4 causes the light emitting bodies 3 to emit light in different light emitting states in the conveyance block 1 in which the specimen tube holder 6 that holds the specimen tube 5 storing a priority processing specimen is present and in the other conveyance blocks 1, or sets one of them to a non-light emitting state.

The control unit 4 can also display which position in the specimen inspection automation system 100 a position of the light emitting body 3 to be caused to emit light is, as necessary, in the system configuration diagram of the display device of the operation unit 120. Accordingly, a position of a specimen tube to be found can be roughly specified.

In the specimen conveyance unit 10 of the present example, in order to specify a type and a position in the system of the specimen tube holder 6, a plurality of sensors 130 for detecting the specimen tube holder 6 are present in the system.

Information on the specimen tube holder 6 collected by the sensor 130 is managed in an integrated manner by the operation unit 120. For example, when the specimen tube holder 6 is transferred between different units, the information on the specimen tube holder 6 and stopover information are transferred. An on or off state of the sensor in the system is stored in the memory inside the operation unit 120, and on and off information on the sensor, the information on the specimen tube holder 6, and the stopover information are received by communication among each of the units. When the position of each specimen tube holder 6 is changed, the stored content is updated, and a light emission command signal is output to the control unit 4 of the specimen conveyance unit 10 as necessary to cause the corresponding light emitting bodies 3 to emit light.

As shown in Figs. 2 and 3, the specimen tube holder 6 includes wheels 61 on both side surfaces thereof, and is capable of driving the wheels 61 by a built-in battery and running on the conveyance plane 2 in two dimensions along the conveyance guide slots 21 provided in the conveyance plane 2.

In the conveyance, when the wheels 61 on both side surfaces of the specimen tube holder 6 rotate in the same direction, the specimen tube holder 6 moves forward or backward. When the wheels 61 on both side surfaces of the specimen tube holder 6 rotate in opposite directions to each other, the specimen tube holder 6 rotates on the spot to change a traveling direction. The specimen tube 5 storing the specimen is installed in the specimen tube holder 6 and is conveyed to a destination.

Next, the specimen conveyance method according to the present example will be described with reference to Fig. 1 and the like.

First, the specimen tube holder 6 in which the specimen tube 5 from which the specimen to be measured is collected is installed is provided in the specimen input unit 112.

The specimen tube holder 6 provided in the specimen input unit 112 is conveyed to the centrifugal separation unit 113 through the conveyance plane 2 of the conveyance block 1. In the centrifugal separation unit 113, the specimen tube 5 installed in the specimen tube holder 6 is transferred to the centrifugal separation mechanism provided in the centrifugal separation unit 113, and the specimen is centrifugally separated under the predetermined condition.

The specimen tube 5 subjected to the centrifugal separation is again installed on the specimen tube holder 6, and is conveyed to the following opening unit 114 through the conveyance plane 2 of the conveyance block 1.

In the opening unit 114, the specimen tube 5 subjected to the centrifugal separation is opened. The specimen tube holder 6 in which the specimen tube 5 opened in the opening unit 114 is installed is conveyed to the dispensing unit 115 through the conveyance plane 2 of the conveyance block 1.

In the dispensing unit 115, a part of the supernatant liquid of the centrifugally separated specimen is dispensed in the other specimen tube 5 different from the specimen tube 5 (hereinafter, referred to as the child specimen tube 5).

The specimen tube holder 6 in which the centrifugally separated specimen is installed is conveyed to the closing unit 110 through the conveyance plane 2 of the conveyance block 1. In the closing unit 110, the specimen tube 5 for which the centrifugal separation is completed is closed.

The specimen tube holder 6 in which the closed and centrifugally separated specimen tube 5 is installed is conveyed to the cold storage unit 111 through the conveyance plane 2 of the conveyance block 1. In the cold storage unit 111, the centrifugally separated and closed specimen tube 5 is cooled and stored in preparation for the possibility of re-inspection.

Meanwhile, the specimen tube holder 6 in which the child specimen tube 5 dispensed from the centrifugally separated specimen tube 5 in the dispensing unit 115 is installed is conveyed to the barcode attaching unit 116 through the conveyance plane 2 of the conveyance block 1.

In the barcode attaching unit 116, the barcode label for identifying the child specimen tube is attached to the side surface of the child specimen tube. The specimen tube holder 6 in which the child specimen tube 5 attached with the barcode label is installed is conveyed to the specimen automatic analysis unit (M) 13 or the specimen automatic analysis unit (C) 12 according to a type of a measurement item requested for the specimen through the conveyance plane 2 of the conveyance block 1.

When a plurality of measurement items are requested for the specimen, according to types of the measurement items, after being conveyed to the specimen automatic analysis unit (M) 13 and measured, the specimen tube holder 6 in which the child specimen tube 5 is installed may be conveyed to the specimen automatic analysis unit (C) 12 through the conveyance plane 2 of the conveyance block 1, so as to have the remaining measurement items measured.

The specimen tube holder 6 in which the child specimen tube 5 for which the measurement is completed is installed is conveyed to and stored in the cold storage unit 111 through the conveyance plane 2 of the conveyance block 1.

In such a specimen inspection automation system 100, a case where an operator desires to grasp a position of a certain specimen tube 5 will be described as an example.

When the operator desires to grasp the position of a certain specimen tube 5, the operator first inputs identification information on the specimen tube 5 from the operation unit 120. All of the light emitting bodies 3 of the conveyance plane 2 in an initial state are in the non-light emitting state, as an example.

When the identification information on the specimen tube 5 is input from the operation unit 120, the control unit 4 causes the light emitting bodies 3 of the conveyance block 1 on the conveyance plane 2 on which the specimen tube holder 6 in which the specimen tube 5 corresponding to the identification information is installed is present to emit light on the basis of information from the sensor 130. Since four light emitting bodies 3 of the present example are mounted on each conveyance block 1, the four light-emitting bodies 3 are caused to emit light. It is not necessary to cause all of the four light emitting bodies to emit light, and for example, one light emitting body 3 closest to the specimen tube holder 6 may be caused to emit light.

When the target specimen tube holder 6 is not on the conveyance plane 2 of the specific conveyance block 1 but is being processed after being conveyed to the specimen pre-treatment and post-treatment unit 11, the specimen automatic analysis unit (M) 13, or the specimen automatic analysis unit (C) 12, the light emitting body 3 of the conveyance block 1 closest to the specimen tube holder 6 is caused to blink. This indicates that the target specimen tube holder 6 is not on the conveyance plane 2 but is located in the vicinity thereof.

A plurality of pieces of identification information on the specimen tube 5 may be input from the operation unit 120. In this case, the light emitting bodies 3 are caused to emit light in different colors, for example, an emission color of the light emitting body 3 corresponding to first identification information is green, an emission color of the light emitting body 3 corresponding to second identification information is red, an emission color of the light emitting body 3 corresponding to third identification information is yellow, and an emission color of the light emitting body 3 corresponding to fourth identification information is blue. This enables to distinguish and recognize the specimen tubes 5. In this case, desirably, the colors are respectively assigned to the four light emitting bodies 3, and only the light emitting body 3 corresponding to one color emits light.

Further, during normal system operation, it is possible to adopt a method of causing the light emitting bodies 3 of all the conveyance blocks of the specimen conveyance unit 10 to emit light in the same light emitting pattern, and changing a light emitting pattern of only the light emitting body 3 of the specific conveyance block 1 or setting the light emitting body 3 of the specific conveyance block 1 to the non-light emitting state. According to such control, it is also possible to easily grasp the position of the specimen desired to be specified.

Next, effects of the present example will be described.

The above-described specimen conveyance unit 10 according to Example 1 of the present invention includes a plurality of conveyance blocks 1, each of which includes one or more light emitting bodies 3 and conveys the specimen tube holder 6 that holds the specimen tube 5 storing a specimen, and the control unit 4 for controlling the conveyance operation of the specimen tube holder 6 by the conveyance block 1. The control unit 4 causes the light emitting body 3 of the specific conveyance block 1 among the conveyance blocks 1 to emit light in accordance with the conveyance state of the specimen tube holder 6.

As described above, by notifying the operator by the light emission of the light emitting bodies 3, even when an analysis system or a pre-treatment and post-treatment system is enlarged and an operation unit and an actual position on the device desired to be grasped are separated from each other, the operator can easily specify the position on the device of the specimen tube whose position is desired to be grasped and the position on the device of the device part whose position is desired to be grasped, as compared to the device configuration of the related art. Therefore, it is possible to reduce burden on the operator as compared to the related art and improve an efficiency of the conveyance operation and the analysis operation.

In particular, it is possible to grasp at a glance the conveyance state such as specifying a specific specimen position, grasping a congestion situation, specifying an abnormal position, or the like even from a separated position, so that access can be promptly performed as necessary. That is, the present example is very effective even when the operator is not in the vicinity of the light emitting position, and is very suitable as the system becomes larger.

Since the conveyance plane 2 of the conveyance block 1 is made of a material that can transmit light emitted by the light emitting bodies 3 and the light emitting bodies 3 are arranged vertically below the conveyance plane 2A, it is possible to arrange the light emitting bodies 3 at positions without physically interfering with each other on the plane on which the specimen tube holder 6 is conveyed and to realize smooth conveyance of the specimen tube holder 6.

Furthermore, since the light emitting bodies 3 are capable of emitting light of different wavelengths, it is possible to increase variations in expression of the conveyance state and to increase an amount of information to be transmitted to the operator, and thus it is possible to more easily grasp the position and the state of the specimen desired to be specified.

In addition, the control unit 4 causes the light emitting bodies 3 to emit light in different light emitting states in the conveyance block 1 on which the specimen having the coincident identification information with the specimen designated in advance is located and in the other conveyance blocks 1, or sets one of them to the non-light emitting state, so that it is possible to more easily identify the position of the specimen tube holder 6 having the coincident identification information with the specimen tube holder 6 designated in advance, and it is possible to further improve operation efficiency of the operator.

Furthermore, the control unit 4 causes the light emitting bodies 3 to emit light in different light emitting states in the conveyance block 1 in which the specimen tube holder 6 is present and in the other conveyance blocks 1, or sets one of them to the non-light emitting state, so that it is possible to intuitively identify presence or absence and the position of the specimen tube holder 6 on the conveyance block 1.

The control unit 4 causes the light emitting bodies 3 to emit light in different light emitting states in the conveyance block 1 in which the specimen tube holder 6 that holds the specimen tube 5 storing the priority processing specimen is present and in the other conveyance blocks 1, or sets one of them to the non-light emitting state, so that it is possible to easily identify the position of the specimen tube holder 6 to be processed in a prioritized manner on the conveyance block 1.

### <Example 2>

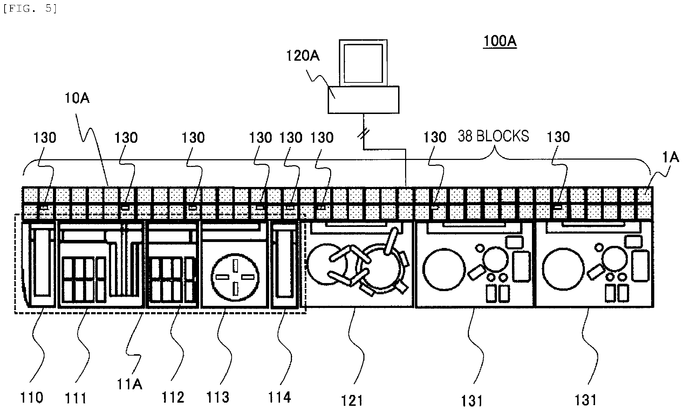

A specimen conveyance device and a specimen conveyance method of Example 2 according to the present invention will be described with reference to Figs. 5 to 7. In Figs. 5 to 7, the same components as in Example 1 are denoted by the same reference numerals, and the description thereof is omitted.

First, a schematic configuration of an automatic analysis system integrated with specimen pre-treatment and post-treatment unit, and automatic analysis unit, including the specimen conveyance device according to Example 2 of the present invention, will be described with reference to Fig. 5. Fig. 5 is a diagram showing the schematic configuration of the automatic analysis system integrated with specimen pre-treatment and post-treatment unit, and automatic analysis unit, using the specimen conveyance device according to Example 2.

An automatic analysis system 100A shown in Fig. 5, integrated with specimen pre-treatment and post-treatment unit, and automatic analysis unit, includes a specimen conveyance unit 10A, a specimen pre-treatment and post-treatment unit 11, a specimen automatic analysis unit (CC) 121, two specimen automatic analysis units (IM) 131, and an operation unit 120A.

In the case of Example 2, the specimen conveyance unit 10A includes a total of 76 conveyance blocks 1. The specimen pre-treatment and post-treatment unit 11A includes the closing unit 110, the cold storage unit 111, the specimen input unit 112, the centrifugal separation unit 113, and the opening unit 114.

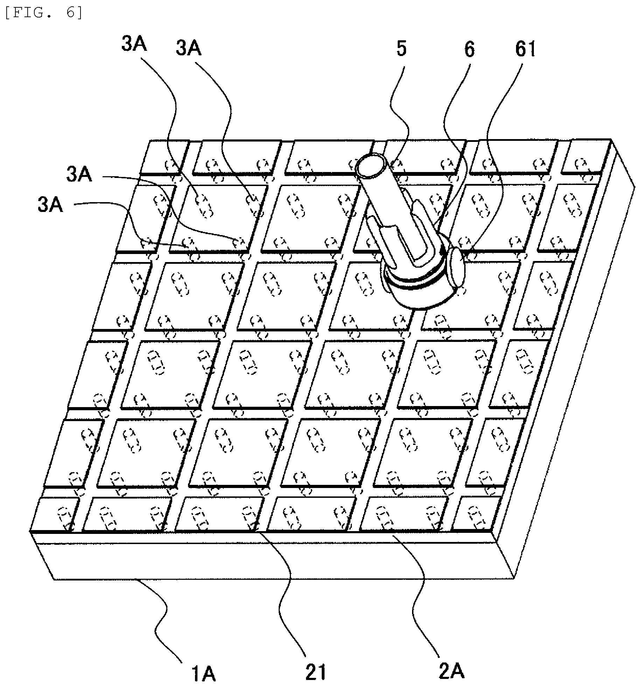

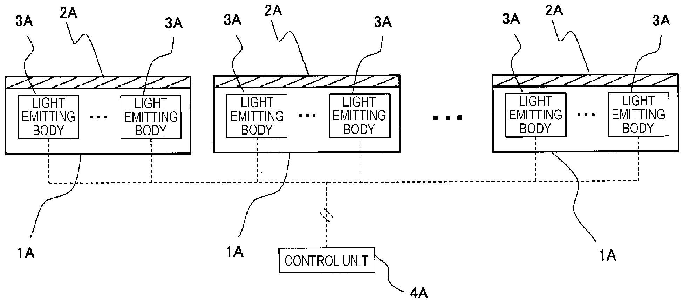

Next, a specific configuration of the specimen conveyance device according to the present example will be described with reference to Figs. 6 and 7. Fig. 6 is a diagram showing a schematic configuration of the conveyance block of the specimen conveyance device according to Example 2. Fig. 7 is a diagram schematically showing a main part of the specimen conveyance device.

As shown in Figs. 6 and 7, the conveyance block 1A constituting the specimen conveyance unit 10A of the present example includes a plurality of light emitting bodies 3A and a conveyance plane 2A that includes the conveyance guide slots 21 for the specimen tube holder 6, as in the example of Fig. 2. As shown in Fig. 5, a plurality of the conveyance blocks 1A are arranged on a two-dimensional plane, so that the specimen conveyance unit 10A is implemented.

In the present example as well, the conveyance plane 2A is made of a material that can transmit light emitted by the plurality of light emitting bodies 3A, and is made of, for example, a translucent or transparent plastic that can transmit light.

The light emitting body 3A is, for example, an LED having a built-in light emitting element of a single color such as green, and 100 light emitting bodies 3A are arranged on a substrate provided under the conveyance plane 2A in each conveyance block 1A.

The light emitting body 3A of the present example can adjust a light intensity emitted by each of the light emitting bodies 3A, that is, a luminance thereof, in a plurality of stages, and has a variable configuration of three stages of luminance, for example.

In the present example as well, the number of the light emitting bodies 3A provided in the conveyance block 1A is not particularly limited, and one or more light emitting bodies 3A may be provided. The light emitting body 3A is not necessarily a monochromatic light source, and may emit light of a plurality of wavelengths as in Example 1.

As shown in Fig. 7, the specimen conveyance device according to the present example includes a control unit 4A that controls the conveyance operation of the specimen tube holder 6 by the plurality of conveyance blocks 1A each including the light emitting bodies 3.

The control unit 4A of the present example is also arranged in the operation unit 120A, and causes the light emitting bodies 3A of a specific conveyance block 1A among the conveyance blocks 1A to emit light in accordance with the information on the conveyance state of the specimen tube holder 6.

In the present example, for example, the control unit 4A can cause the light emitting bodies 3A to emit light in different light emitting states in the conveyance block 1A in which the specimen tube holder 6 is present in a certain number or more and in the other conveyance blocks 1A, or can set one of them to the non-light emitting state. In this case, it is desirable that setting change can be performed by the operation of the operation unit 120A with respect to a reference number no less than the certain number.

In addition, the control unit 4A can cause the light emitting bodies 3A to emit light in different light emitting states in the conveyance block 1A in which the specimen tube holder 6 for which a certain amount of time or more has elapsed without conveyance is present and in the other conveyance blocks 1A, or can set one of them to the non-light emitting state. In this case as well, it is desirable that the setting change can be performed by the operation of the operation unit 120A with respect to a staying time.

According to operation setting from the operation unit 120A, it is possible to switch between changing a light emission amount only in one specimen tube holder 6 and returning the light emitting state of the light emitting bodies 3A to the initial state when the specimen tube holder 6 moves, or changing the light emission state by accumulating a time after a power source is turned on during which all the specimen tube holders 6 in the vicinity of the light emitting body 3A do not move.

The present example is the same in that the specimen tube holder 6 includes the wheels 61 on both side surfaces thereof, drives the wheels 61 by the built-in battery, and can automatically run on the conveyance plane 2A in two dimensions along the conveyance guide slots 21 provided in the conveyance plane 2A.

Next, the specimen conveyance method according to the present example will be described with reference to Fig. 5 and the like.

First, the specimen tube holder 6 in which the specimen tube 5 from which the specimen to be measured is collected is installed is provided in the specimen input unit 112.

The specimen tube holder 6 provided in the specimen input unit 112 is conveyed to the centrifugal separation unit 113 through the conveyance plane 2A of the conveyance block 1A. In the centrifugal separation unit 113, the specimen tube 5 installed in the specimen tube holder 6 is transferred to the centrifugal separation mechanism provided in the centrifugal separation unit 113. In the transferred specimen tube 5, the specimen is centrifugally separated under the predetermined condition.

The specimen tube 5 subjected to the centrifugal separation is again installed on the specimen tube holder 6, and is conveyed to the following opening unit 114 through the conveyance plane 2A of the conveyance block 1A.

In the opening unit 114, the specimen tube 5 subjected to the centrifugal separation is opened. The specimen tube holder 6 in which the specimen tube 5 opened in the opening unit 114 is installed is conveyed to the specimen automatic analysis units (IM) 131 or the specimen automatic analysis unit (CC) 121 according to the type of the measurement item requested for the specimen through the conveyance plane 2A of the conveyance block 1A.

When a plurality of measurement items are requested for the specimen, according to the types of the measurement items, after being conveyed to the specimen automatic analysis units (IM) 131 and measured, the specimen tube holder 6 may be conveyed to the specimen automatic analysis unit (CC) 121 through the conveyance plane 2A of the conveyance block 1A, so as to have the remaining measurement items measured.

The specimen tube holder 6 in which the specimen for which the measurement is completed is installed is conveyed to the closing unit 110 through the conveyance plane 2A of the conveyance block 1A.

In the closing unit 110, the specimen tube 5 for which the measurement is completed is closed. The specimen tube holder 6 in which the closed specimen tube 5 is installed is conveyed to the cold storage unit 111 through the conveyance plane 2A of the conveyance block 1A. In the cold storage unit 111, the specimen tube 5 is cooled and stored in preparation for the possibility of re-inspection.

In the automatic analysis system 100A as described above, integrated with specimen pre-treatment and post-treatment unit, and automatic analysis unit, a case of displaying a congested state of the conveyance will be described as an example.

When recognizing that a power source of the automatic analysis system 100A, integrated with specimen pre-treatment and post-treatment unit, and automatic analysis unit, is turned on, the control unit 4A blinks the light emitting bodies 3A in the conveyance block 1A at a certain cycle. First, when the power source is turned on, the light emitting bodies 3A blink at a light emission amount having the lowest luminance.

Thereafter, when the specimen tube holder 6 is input into the specimen input unit 112 of the specimen pre-treatment and post-treatment unit 11A, the input specimen tube holder 6 is conveyed from the specimen input unit 112 to each processing unit via the conveyance block 1A for each processing.

When the specimen tube holders 6 are input sequentially, and a supply speed of the specimen tube holder 6 to each unit of the specimen pre-treatment and post-treatment unit 11A is faster than a processing speed of each unit or a supply speed of each specimen tube holder 6 to the specimen automatic analysis units (IM) 131 or the specimen automatic analysis unit (CC) 121 is faster than a processing speed of each specimen automatic analysis unit, the specimen tube holder 6 enters a waiting state before the unit or the automatic analysis unit, and congestion of the specimen tube holder 6 occurs.

When the specimen tube holder 6 has not moved for a certain period of time, the light emission state of the light emitting body 3A closest to the specimen tube holder 6 is changed from blinking at the light emission amount having the lowest luminance among the three stages to lighting at the light emission amount having the lowest luminance among the three stages.

When the specimen tube holder 6 has not moved even after a certain period of time has further elapsed, the light emitting state of the light emitting body 3A is changed from lighting at the light emission amount having the lowest luminance among the three stages to lighting at a light emission amount having an intermediate luminance among the three stages.

When the specimen tube holder 6 has not moved even after a certain period of time has further elapsed, the light emitting state of the light emitting body 3A is changed from lighting at the light emission amount having the intermediate luminance among the three stages to a light emission amount having the brightest luminance among the three stages.

When the specimen tube holder 6 moves, the light emitting body 3A is changed from the lighting state to the original blinking state at the light emission amount having the lowest luminance among the three stages.

In addition, when the specimen tube holder 6 moves but at a low movement speed and a plurality of specimen tube holders 6 are present on the conveyance block 1A, a light emitting state of the light emitting body 3A closest to the specimen tube holder 6 is changed from blinking at the light emission amount having the lowest luminance among the three stages to lighting at the light emission amount having the lowest luminance among the three stages. When the specimen tube holder 6 further stays, the luminance is further increased.

In such a method, the operator can visually see the congested state and an actual congested portion on the specimen conveyance unit 10 by a shade of the light emission amount of the light emitting body 3A.

Change of setting of various light emitting states, such as changing the initial light emitting state to blinking at the light emission amount having the lowest luminance among the three stages or to a light-off state, can also be switched by the operation setting of the operation unit 120A of the system.

Other configurations and operations are substantially the same as configurations and operations of the specimen conveyance device and the specimen conveyance method according to Example 1 described above, and details are omitted.

The specimen conveyance device and the specimen conveyance method according to Example 2 of the present invention can also obtain substantially the same effects as those of the specimen conveyance device and the specimen conveyance method according to Example 1 described above.

In addition, since each conveyance block 1A has a plurality of light emitting bodies 3 or the light intensity can be adjusted, it is possible to increase the variations in expression of the conveyance state, and thus an amount of information to be transmitted to the operator can be increased, and the position and the state thereof can be more easily grasped.

Furthermore, the control unit 4A causes the light emitting bodies 3A to emit light in different light emitting states in the conveyance block 1A in which the specimen tube holder 6 is present in a certain number or more and in the other conveyance blocks 1A, or sets one of them to the non-light emitting state, so that the congestion state of the conveyance block 1A can be easily identified.

Accordingly, for example, when it is determined that chronic congestion occurs in the opening unit 114, it means that a processing capability of the opening unit 114 is insufficient, and thus the operator of the system can quickly take an improvement measure such as additionally introducing another opening unit 114 to the system in order to improve a processing capability of the system per se. Therefore, the processing capability of the system can be improved more easily than that in the related art.

In addition, when a chronic congestion occurs in one of the two specimen automatic analysis units (IM) 131 of the present example, it is possible to operate the operation unit 120A to shift a part of the measurement items from the specimen automatic analysis units (IM) 131 on a congested side to the specimen automatic analysis unit (IM) 131 on a non-congested side, and it is possible to obtain an effect of easily improving throughput of the analysis.

In addition, the control unit 4A causes the light emitting bodies 3A to emit light in different light emitting states in the conveyance block 1A in which the specimen tube holder 6 for which a certain amount of time or more has elapsed without conveyance is present and in the other conveyance blocks 1A, or sets one of them to the non-light emitting state, so that it is possible to easily identify the conveyance block 1A in which the conveyance is stopped and to quickly take measures for stopping similarly.

### <Others>

The present invention is not limited to the above examples, and includes various modifications as long as the modifications are still covered by the appended claims.

A part of a configuration of one example can be replaced with a configuration of the other example, and the configuration of the other example can be added to the configuration of the one example. A part of a configuration of each example may be added, deleted, or replaced with the other configuration as long as the resulting configuration is still covered by the amended claims.

For example, in each example described above, a configuration in which the specimen tube holder 6 is moved on the conveyance planes 2 and 2A by the rotation of the wheels 61 has been described, while the conveyance method of the specimen tube holder 6 is not limited to the automatic running method, and can be applied to specimen conveyance devices having various methods for conveying on a two-dimensional plane, and can be suitably applied to a specimen conveyance device using a conveyance method by an electromagnetic actuator, for example.

### Reference Signs List

1, 1A: conveyance block
2, 2A: conveyance plane
3, 3A: light emitting body
4, 4A: control unit
5: specimen tube
6: specimen tube holder
10, 10A: specimen conveyance unit (specimen conveyance device)
11, 11A: specimen pre-treatment and post-treatment unit
12, 13, 121, 131: specimen automatic analysis unit
21: conveyance guide slot
61: wheels
100: specimen inspection automation system
100A: automatic analysis system integrated with specimen pre-treatment and post-treatment unit, and automatic analysis unit
110: closing unit
111: cold storage unit
112: specimen input unit
113: centrifugal separation unit
114: opening unit
115: dispensing unit
116: barcode attaching unit
120, 120A: operation unit
130: sensor

## Claims

1. A specimen conveyance device comprising:
a plurality of conveyance blocks (1), each of which includes one or more light emitting bodies (3) and conveys a specimen tube holder (6) that holds a specimen tube (5) storing a specimen; and
a control unit (120) configured to control the conveyance operation of the specimen tube holder (6) by the conveyance block (1), wherein
the control unit (120) is further configured to cause at least one of the one or more light emitting bodies (3) of a specific conveyance block (1) among the conveyance blocks (1) to emit light according to the conveyance state of the specimen tube holder (6), **characterized in that** the control unit (120) is further configured to cause the at least one of the one or more light emitting bodies (3) to emit light in different light emitting states in the conveyance block (1) in which a specimen tube holder (6) that holds a specimen tube (5) storing a priority processing specimen is present than in the other conveyance blocks (1) in which a specimen tube holder (6) that holds a specimen tube (5) storing a priority processing specimen is not present, or to set either said conveyance block (1) in which the specimen tube holder (6) that holds a specimen tube (5) storing a priority processing specimen is present or said other conveyance blocks (1) to a non-light emitting state.

2. The specimen conveyance device according to claim 1, wherein
the conveyance surface of the conveyance block (1) is made of a material that can transmit light emitted by the light emitting body (3), and
the light emitting body (3) is arranged vertically below the conveyance surface.

3. The specimen conveyance device according to claim 1, wherein the light emitting body (3) can emit light of different wavelengths.

4. The specimen conveyance device according to claim 1, wherein the light emitting body (3) can adjust the light intensity.

5. The specimen conveyance device according to claim 1, wherein the control unit (120) is configured to cause the light emitting bodies (3) to emit light in different light emitting states in the conveyance block (1) on which the specimen having the coincident identification information with the specimen designated in advance is located than in the other conveyance blocks (1) on which the specimen having the coincident identification information with the specimen designated in advance is not located, or to set either said conveyance block (1) specimen having the coincident identification information with the specimen designated in advance is located or said other conveyance blocks (1) to the non-light emitting state, wherein the identification information of the specimen corresponds to the identification information of a specimen tube (5) input by an operator from the control unit (120).

6. The specimen conveyance device according to claim 1, wherein the control unit (120) is configured to cause the light emitting bodies (3) to emit light in different light emitting states in the conveyance block (1) in which the specimen tube holder (6) is present in a certain number or more than in the other conveyance blocks (1) in which the specimen tube holder (6) is not present in a certain number or more, or to set either the conveyance block (1) in which the specimen tube holder (6) is present in a certain number or more or said the other conveyance blocks (1) in which the specimen tube holder (6) is not present in a certain number or more to the non-light emitting state.

7. The specimen conveyance device according to claim 1, wherein the control unit (120) is configured to cause the light emitting bodies (3) to emit light in different light emitting states in the conveyance block (1) in which the specimen tube holder (6) for which a certain amount of time or more has elapsed without conveyance is present than in the other conveyance blocks (1) in which the specimen tube holder (6) for which a certain amount of time or more has elapsed without conveyance is not present, or to set either said conveyance block (1) in which the specimen tube holder (6) for which a certain amount of time or more has elapsed without conveyance is present or the other conveyance blocks (1) in which the specimen tube holder (6) for which a certain amount of time or more has elapsed without conveyance is not present to the non-light emitting state.

8. The specimen conveyance device according to claim 1, wherein the specimen tube holder (6) is configured to move on an upper surface of the conveyance block (1) by rotation of wheels (61) or by an electromagnetic actuator.

9. A method for conveying a specimen stored in a specimen tube (5) held by a specimen tube holder (6) using a specimen conveyance device according to one of the preceding claims, comprising:
a conveying step of conveying the specimen tube holder (6) by the plurality of conveyance blocks (1), and
a light emitting step of causing at least one of the one or more light emitting bodies of a specific conveyance block (1) among the conveyance blocks (1) to emit light in accordance with the conveyance state of the specimen tube holder (6) during the conveying step using the control unit (120) of the specimen conveyance device, wherein
in the light emitting step, the at least one of the one or more light emitting bodies (3) are caused to emit light in different light emitting states in the conveyance block (1) in which a specimen tube holder (6) that holds a specimen tube (5) storing a priority processing specimen is present and in the other conveyance blocks (1), or one of them are set to a non-light emitting state using the control unit (120) of the specimen conveyance device.

## Patentansprüche

1. Probenförderungsvorrichtung, umfassend:
mehrere Förderungsblöcke (1), von denen jeder einen oder mehrere Lichtemissionskörper (3) umfasst und einen Probenröhrchenhalter (6) fördert, der ein Probenröhrchen (5) hält, das eine Probe speichert; und
eine Steuereinheit (120), die dazu ausgelegt ist, den Förderungsvorgang des Probenröhrchenhalters (6) durch den Förderungsblock (1) zu steuern, wobei
die Steuereinheit (120) ferner dazu ausgelegt ist, mindestens einen des einen oder der mehreren Lichtemissionskörper (3) eines spezifischen Förderungsblocks (1) unter den Förderungsblöcken (1) zu veranlassen, gemäß dem Förderungszustand des Probenröhrchenhalters (6) Licht zu emittieren,
**dadurch gekennzeichnet, dass**
die Steuereinheit (120) ferner dazu ausgelegt ist, den mindestens einen des einen oder der mehreren Lichtemissionskörper (3) zu veranlassen, in unterschiedlichen Lichtemissionszuständen in dem Förderungsblock (1), in dem ein Probenröhrchenhalter (6) vorhanden ist, der ein Probenröhrchen (5) hält, das eine Prioritätsverarbeitungsprobe speichert, als in den anderen Förderungsblöcken (1), in denen ein Probenröhrchenhalter (6), der ein Probenröhrchen (5) hält, das eine Prioritätsverarbeitungsprobe speichert, nicht vorhanden ist, Licht zu emittieren, oder entweder den Förderungsblock (1), in dem der Probenröhrchenhalter (6) vorhanden ist, der ein Probenröhrchen (5) hält, das eine Prioritätsverarbeitungsprobe speichert, oder die anderen Förderungsblöcke (1) auf einen Nicht-Lichtemissionszustand einzustellen.

2. Probenförderungsvorrichtung nach Anspruch 1, wobei
die Förderungsoberfläche des Förderungsblocks (1) aus einem Material hergestellt ist, das Licht durchlassen kann, das vom Lichtemissionskörper (3) emittiert wird, und
der Lichtemissionskörper (3) vertikal unterhalb der Förderungsoberfläche angeordnet ist.

3. Probenförderungsvorrichtung nach Anspruch 1, wobei der Lichtemissionskörper (3) Licht unterschiedlicher Wellenlängen emittieren kann.

4. Probenförderungsvorrichtung nach Anspruch 1, wobei der Lichtemissionskörper (3) die Lichtintensität einstellen kann.

5. Probenförderungsvorrichtung nach Anspruch 1, wobei die Steuereinheit (120) dazu ausgelegt ist, die Lichtemissionskörper (3) zu veranlassen, in unterschiedlichen Lichtemissionszuständen in dem Förderungsblock (1), auf dem sich die Probe befindet, die die übereinstimmende Identifikationsinformation mit der im Voraus bezeichneten Probe hat, als in den anderen Förderungsblöcken (1), auf denen sich die Probe, die die übereinstimmende Identifikationsinformation mit der im Voraus bezeichneten Probe hat, nicht befindet, Licht zu emittieren, oder entweder den Förderungsblock (1), auf dem sich die Probe befindet, die die übereinstimmende Identifikationsinformation mit der im Voraus bezeichneten Probe hat, oder die anderen Förderungsblöcke (1) auf den Nicht-Lichtemissionszustand einzustellen, wobei die Identifikationsinformation der Probe der Identifikationsinformation eines Probenröhrchens (5) entspricht, die von einem Bediener von der Steuereinheit (120) eingegeben wird.

6. Probenförderungsvorrichtung nach Anspruch 1, wobei die Steuereinheit (120) dazu ausgelegt ist, die Lichtemissionskörper (3) zu veranlassen, in unterschiedlichen Lichtemissionszuständen in dem Förderungsblock (1), in dem der Probenröhrchenhalter (6) in einer bestimmten Anzahl oder mehr vorhanden ist, als in den anderen Förderungsblöcken (1), in denen der Probenröhrchenhalter (6) nicht in einer bestimmten Anzahl oder mehr vorhanden ist, Licht zu emittieren, oder entweder den Förderungsblock (1), in dem der Probenröhrchenhalter (6) in einer bestimmten Anzahl oder mehr vorhanden ist, oder die anderen Förderungsblöcke (1), in denen der Probenröhrchenhalter (6) nicht in einer bestimmten Anzahl oder mehr vorhanden ist, auf den Nicht-Lichtemissionszustand einzustellen.

7. Probenförderungsvorrichtung nach Anspruch 1, wobei die Steuereinheit (120) dazu ausgelegt ist, die Lichtemissionskörper (3) zu veranlassen, in unterschiedlichen Lichtemissionszuständen in dem Förderungsblock (1), in dem der Probenröhrchenhalter (6) vorhanden ist, für den eine bestimmte Zeitspanne oder mehr verstrichen ist, ohne dass eine Förderung erfolgt ist, als in den anderen Förderungsblöcken (1), in denen der Probenröhrchenhalter (6), für den eine bestimmte Zeitspanne oder mehr verstrichen ist, ohne dass eine Förderung erfolgt ist, nicht vorhanden ist, Licht zu emittieren, oder entweder den Förderungsblock (1), in dem der Probenröhrchenhalter (6) vorhanden ist, für den eine bestimmte Zeitspanne oder mehr verstrichen ist, ohne dass eine Förderung erfolgt ist, oder die anderen Förderungsblöcke (1), in denen der Probenröhrchenhalter (6), für den eine bestimmte Zeitspanne oder mehr verstrichen ist, ohne dass eine Förderung erfolgt ist, nicht vorhanden ist, auf den Nicht-Lichtemissionszustand einzustellen.

8. Probenförderungsvorrichtung nach Anspruch 1, wobei der Probenröhrchenhalter (6) dazu ausgelegt ist, sich auf einer oberen Oberfläche des Förderungsblocks (1) durch Drehung von Rädern (61) oder durch einen elektromagnetischen Aktuator zu bewegen.

9. Verfahren zur Förderung einer in einem Probenröhrchen (5) gespeicherten Probe, das von einem Probenröhrchenhalter (6) gehalten wird, unter Verwendung einer Probenförderungsvorrichtung gemäß einem der vorstehenden Ansprüche, umfassend:
einen Förderungsschritt des Förderns des Probenröhrchenhalters (6) durch die mehreren Förderungsblöcke (1), und
einen Lichtemissionsschritt des Veranlassens mindestens eines des einen oder der mehreren Lichtemissionskörper eines spezifischen Förderungsblocks (1) unter den Förderungsblöcken (1), gemäß dem Förderungszustand des Probenröhrchenhalters (6) während des Förderungsschritts unter Verwendung der Steuereinheit (120) der Probenförderungsvorrichtung Licht zu emittieren, wobei
im Lichtemissionsschritt der mindestens eine des einen oder der mehreren Lichtemissionskörper (3) veranlasst wird, in unterschiedlichen Lichtemissionszuständen in dem Förderungsblock (1), in dem ein Probenröhrchenhalter (6) vorhanden ist, der ein Probenröhrchen (5) hält, das eine Prioritätsverarbeitungsprobe speichert, und in den anderen Förderungsblöcken (1) Licht zu emittieren, oder einer von ihnen auf einen Nicht-Lichtemissionszustand eingestellt wird, unter Verwendung der Steuereinheit (120) der Probenförderungsvorrichtung.

## Revendications

1. Dispositif de transport d'échantillon comprenant :
une pluralité de blocs (1) de transport, dont chacun inclut un ou plusieurs corps (3) émetteurs de lumière et transporte un porte-tube (6) à échantillon qui contient un tube (5) à échantillon stockant un échantillon ; et
une unité (120) de commande configurée pour commander l'opération de transport du porte-tube (6) à échantillon par le bloc (1) de transport, dans lequel
l'unité (120) de commande est en outre configurée pour amener au moins un du ou des corps (3) émetteurs de lumière d'un bloc (1) de transport spécifique parmi les blocs (1) de transport à émettre une lumière en fonction de l'état de transport du porte-tube (6) à échantillon,
**caractérisé en ce que** l'unité (120) de commande est en outre configurée pour amener l'au moins un du ou des corps (3) émetteurs de lumière à émettre une lumière dans des états d'émission de lumière différents dans le bloc (1) de transport dans lequel un porte-tube (6) à échantillon qui contient un tube (5) à échantillon stockant un échantillon pour traitement prioritaire est présent et dans les autres blocs (1) de transport dans lesquels un porte-tube (6) à échantillon qui contient un tube (5) à échantillon stockant un échantillon pour traitement prioritaire n'est pas présent, ou à paramétrer soit ledit bloc (1) de transport dans lequel le porte-tube (6) à échantillon qui contient un tube (5) à échantillon stockant un échantillon pour traitement prioritaire est présent, soit lesdits autres blocs (1) de transport sur un état non émetteur de lumière.

2. Dispositif de transport d'échantillon selon la revendication 1, dans lequel
la surface de transport du bloc (1) de transport est constituée d'un matériau qui peut transmettre une lumière émise par le corps (3) émetteur de lumière, et
le corps (3) émetteur de lumière est agencé verticalement en-dessous de la surface de transport.

3. Dispositif de transport d'échantillon selon la revendication 1, dans lequel le corps (3) émetteur de lumière peut émettre une lumière de différentes longueurs d'onde.

4. Dispositif de transport d'échantillon selon la revendication 1, dans lequel le corps (3) émetteur de lumière peut ajuster l'intensité de lumière.

5. Dispositif de transport d'échantillon selon la revendication 1, dans lequel l'unité (120) de commande est configurée pour amener les corps (3) émetteurs de lumière à émettre une lumière dans des états d'émission de lumière différents dans le bloc (1) de transport sur lequel l'échantillon ayant les informations d'identification coïncidentes avec l'échantillon désigné à l'avance est situé et les autres blocs (1) de transport sur lesquels l'échantillon ayant les informations d'identification coïncidentes avec l'échantillon désigné à l'avance n'est pas situé, ou à paramétrer soit ledit bloc (1) de transport sur lequel l'échantillon ayant les informations d'identification coïncidentes avec l'échantillon désigné à l'avance est situé, soit lesdits autres blocs (1) de transport sur l'état non émetteur de lumière, dans lequel les informations d'identification de l'échantillon correspondent aux informations d'identification d'un tube (5) à échantillon entrées par un opérateur depuis l'unité (120) de commande.

6. Dispositif de transport d'échantillon selon la revendication 1, dans lequel l'unité (120) de commande est configurée pour amener les corps (3) émetteurs de lumière à émettre une lumière dans des états d'émission de lumière différents dans le bloc (1) de transport dans lequel le porte-tube (6) à échantillon est présent dans un certain nombre ou plus et dans les autres blocs (1) de transport dans lesquels le porte-tube (6) à échantillon n'est pas présent dans un certain nombre ou plus, ou à paramétrer soit ledit bloc (1) de transport dans lequel le porte-tube (6) à échantillon est présent dans un certain nombre ou plus, soit lesdits autres blocs (1) de transport dans lesquels le porte-tube (6) à échantillon n'est pas présent dans un certain nombre ou plus sur l'état non émetteur de lumière.

7. Dispositif de transport d'échantillon selon la revendication 1, dans lequel l'unité (120) de commande est configurée pour amener les corps (3) émetteurs de lumière à émettre une lumière dans des états d'émission de lumière différents dans le bloc (1) de transport dans lequel le porte-tube (6) à échantillon pour lequel une certaine quantité de temps ou plus s'est écoulée sans transport est présent et dans les autres blocs (1) de transport dans lesquels le porte-tube (6) à échantillon pour lequel une certaine quantité de temps ou plus s'est écoulée sans transport n'est pas présent, ou à paramétrer soit ledit bloc (1) de transport dans lequel le porte-tube (6) à échantillon pour lequel une certaine quantité de temps ou plus s'est écoulée sans transport est présent, soit les autres blocs (1) de transport dans lesquels le porte-tube (6) à échantillon pour lequel une certaine quantité de temps ou plus s'est écoulée sans transport n'est pas présent sur l'état non émetteur de lumière.

8. Dispositif de transport d'échantillon selon la revendication 1, dans lequel le porte-tube (6) à échantillon est configuré pour se déplacer sur une surface supérieure du bloc (1) de transport par une rotation de roues (61) ou par un actionneur électromagnétique.

9. Procédé pour transporter un échantillon stocké dans un tube (5) à échantillon contenu par un porte-tube (6) à échantillon en utilisant un dispositif de transport d'échantillon selon l'une des revendications précédentes, comprenant :
une étape de transport pour transporter le porte-tube (6) à échantillon par la pluralité de blocs (1) de transport, et
une étape d'émission de lumière pour amener au moins un du ou des corps (3) émetteurs de lumière d'un bloc (1) de transport spécifique parmi les blocs (1) de transport à émettre une lumière en fonction de l'état de transport du porte-tube (6) à échantillon lors de l'étape de transport en utilisant l'unité (120) de commande du dispositif de transport d'échantillon, dans lequel
à l'étape d'émission de lumière, l'au moins un du ou des corps (3) émetteurs de lumière sont amenés à émettre une lumière dans des états d'émission de lumière différents dans le bloc (1) de transport dans lequel un porte-tube (6) à échantillon qui contient un tube (5) à échantillon stockant un échantillon pour traitement prioritaire est présent et dans les autres blocs (1) de transport, ou un d'entre eux sont paramétrés sur un état non émetteur de lumière en utilisant l'unité (120) de commande du dispositif de transport d'échantillon.
